# EUROPÄISCHE PATENTANMELDUNG

(11) **EP 1 205 410 A1**
(43) Veröffentlichungstag der Anmeldung: **15.05.2002**
(21) Anmeldenummer: 01123647.8
(22) Anmeldetag: 02.10.2001
(51) Int. Cl.: B65G 47/244

(54) **Förder- und Drehvorrichtung**

(30) Priorität: 02.10.2000 DE 10049077
(71) Anmelder: Schuster, Thomas, 87754 Kammlach (DE)
(72) Erfinder: Schuster, Thomas, 87754 Kammlach (DE)
(74) Vertreter: Fiener, Josef

(57) **Zusammenfassung**

Zur Bereitstellung einer kompakten Förder- und Drehvorrichtung wird vorgeschlagen, zwei Förderelemente (3a; 3b) als Doppelförderer, vorzugsweise als Förderbänder, nebeneinander im Parallelbetrieb anzuordnen. Werden beide Förderelemente (3a; 3b) in gleicher Richtung angetrieben, wirken sie wie ein einziges Förderband und bewegen das ballenförmige Fördergut (1) translatorisch gemeinsam in eine Richtung (5; 7). Bei unterschiedlicher Antriebsrichtung (11a; 11b) oder unterschiedlichen Fördergeschwindigkeiten der beiden Förderelemente (3a; 3b) wird das Fördergut (1) in eine Drehbewegung um eine Vertikalachse versetzt.

## Beschreibung

Die Erfindung betrifft eine Förder- und Drehvorrichtung zum Transportieren und Drehen eines ballenförmigen Förderguts, insbesondere an einer Kreuzumreifungsvorrichtung.

In der Fördertechnik wird wegen der oft großen Zahl von hintereinander geschalteten Förderelementen eine hohe Zuverlässigkeit bei einfacher Bauweise und geringen Abmessungen erwartet. Zur Lastabstützung und für den Transport dienen im allgemeinen Rollen sowie Ketten und Gummi- oder Stahlgurtbänder. Insbesondere im Verpackungsbereich werden an Verpackungsmaschinen mit integrierten Kreuzumreifungsvorrichtungen Fördermittel benötigt, die das Fördergut sowohl eine Translations- als auch eine Rotationsbewegung ausführen lassen.

Aus der DE-OS 196 04 310 ist eine Kreuzumreifungsvorrichtung bekannt, wobei das zu umreifende Produkt sowohl um eine vertikale Achse bei einem Drehwinkel von 90° gedreht werden kann als auch horizontal bewegbar ist. Das zu umreifende Gut wird auf einem Transportband der Kreuzumreifungsvorrichtung zugeführt. In gleicher Richtung wird das umreifte Gut auch wieder von einem Transportband abtransportiert. Der Arbeitstisch ist zwischen beiden Transportbändern angeordnet. Die Umreifungsvorrichtung ist in einem Bandführungsrahmen quer zur Transportrichtung am Arbeitstisch eingebaut. Die konstruktive Ausgestaltung des Bandführungsrahmens und der unterhalb des Arbeitstisches angeordneten Einschieß-, Rückspann-, Schweiß- und Trennvorrichtung ist allgemein bekannt. Der Arbeitstisch ist hierbei teilweise als drehbarer Drehteller ausgebildet, der aus vier Sektoren besteht. Der Drehteller ist somit durch zwei Trenngeraden oder Abstände in vier gleiche Sektoren aufgeteilt, die durch den Mittelpunkt des Drehtellers verlaufen. Nach der ersten Umreifung des Produktes mit Hilfe des Bandführungsrahmens wird der Drehteller und damit das Produkt um 90° gedreht. Bedingt durch die als Abstand ausgebildete Trenngerade zwischen den Sektoren ist auch nach der Drehung eine Umwicklung des Produktes möglich. Am Arbeitstisch sind keine Förderelemente angebracht. Das Produkt muß deshalb von gesonderten Schiebern vom Transportband auf den Drehteller geschoben werden. Nach erfolgter zweifacher Umreifung wird eine Hälfte des Arbeitstisches einschließlich von zwei Sektoren des Drehtellers abgeklappt, so daß das Produkt durch die Gravitation auf das Förderband der Abtransporteinrichtung rutscht.

Nachteilig ist hierbei der technisch aufwendige Drehteller. Nachdem der Arbeitstisch selbst über keine Fördermittel verfügt, muß der Transport des Produktes am Drehteller durch komplizierte Vorrichtungen, nämlich den an einem Endloszahnriemen befestigten Schiebern und das teilweise Abklappen des Arbeitstisches erfolgen, so daß hohe Kosten für den Aufbau und den Unterhalt dieser Mechanismen erforderlich sind. Zudem ist dieses Prinzip kaum für in Folien verpackte Schüttgüter bzw. Ballen geeignet, weil der Arbeitstisch lediglich der Lastabstützung und nicht dem Transport dient, so daß es durch das Verschieben und Rutschen zu Zerstörungen der Verpackungsfolie kommen kann.

Neben dieser Vorrichtung ist auch eine Kreuzumreifungsvorrichtung innerhalb einer Verpackungsanlage für Schüttgüter, beispielsweise Plastik, Papier, Kartonagen, Granulate, Kies und Sand, bekannt (vgl. WO 94/02358). Diese Verpackungsanlage ist im allgemeinen in drei Normcontainer integriert. Im ersten Container ist eine Haspel als Wickelform eingebaut. Die Verpackungsfolie wird zu einem Gebinde gewickelt, deren Form der Haspel entspricht. Beispielsweise können im Querschnitt rechteckige, ellipsenförmige oder kreisförmige Ballen gewickelt werden. Das Verschließen des Gebindes am unteren Ende erfolgt mit einer Verschlußzange durch Zusammendrehen des Gebindes zu einem Verschlußzopf. Der obere Teil der Wickelform ist zum Befüllen als trichterförmiger Ring ausgebildet. Nach erfolgter Befüllung wird die an der Unterseite bereits verschlossene Verpackung am Boden mit Hilfe eines Hubtisches vom ersten Container in einen darunterliegenden zweiten Container abgesenkt. In diesem zweiten Container wird dann der Ballen an der Oberseite in der gleichen Weise wie an der Unterseite durch eine Verschlußzange verschlossen. Anschließend wird der Ballen mit Hilfe eines Förderbandes in einen dritten Container einer Kreuzumreifungsvorrichtung zugeführt. Dieser liegt auf gleicher Ebene neben dem zweiten Container. Bei der Kreuzumreifungsvorrichtung wird eine handelsübliche, bekannte Ausführungsform verwendet. Um das vollständige Umwickeln zu ermöglichen, sind zwei Förderbänder so nacheinander angeordnet, daß dazwischen ein Spalt frei bleibt, der ein vollständiges Umreifen des Ballens mit Verspannung ermöglicht. Zur überbrückung dieses Spaltes können bei fließfähigem Schüttmaterial auch Haltestäbe zwischen Ballen und Umreifungsband vorgesehen werden. Nach erfolgter ersten Umreifung wird der Ballen durch das Förderband einem gesonderten Drehtisch zugeführt, dabei um 90° in vertikaler Achse gedreht und von den Förderbändern wieder an der Stelle des Spaltes zwischen den beiden nacheinander angeordneten Förderbändern positioniert. Hier erfolgt dann die zweite Umreifung des Ballens rechtwinklig zur ersten. Der damit fertiggestellte Ballen wird anschließend einer Ausgabestation zugeführt.

Nachteilig ist hierbei, daß ein aufwendiger Drehtisch mit untenliegendem Antrieb verwendet werden muß, wodurch auch ein zusätzlicher horizontaler Platzbedarf im dritten Container entsteht. Darüber hinaus können die Förderbänder nur in einem relativ großen Abstand vom Boden des Containers montiert werden, weil die Förderbänder und der Drehtisch auf dem gleichen Niveau sein müssen sowie an der Unterseite des Drehtisches Raum für die diesbezüglichen Antriebsvorrichtungen notwendig ist.

Demzufolge liegt der Erfindung die Aufgabe zugrunde, eine Förder- und Drehvorrichtung zu schaffen, die die vorstehenden Nachteile beseitigt und durch eine einfache und kompakte Bauweise bietet.

Diese Aufgabe wird gelöst durch eine Förder- und Drehvorrichtung gemäß den Merkmalen des Anspruchs 1. Vorteilhafte Ausgestaltungen sind Gegenstand der Unteransprüche.

Neuerungsgemäß werden dabei zwei Förderelemente nebeneinander in "Parallelschaltung" als Doppelförderelement angeordnet. Vorzugsweise wird als Förderelement ein Förderband mit zwei Umlenkwalzen verwendet. Die Umlenkwalzen der beiden Förderbänder verlaufen vorzugsweise entlang einer Achse, so daß beide Förderbänder gleich lang sind. Ist ein Fördergut, beispielsweise ein Ballen aus einer Verpackungsanlage, zu transportieren, liegt das Fördergut auf beiden Förderbändern auf, d. h. beide Förderbänder dienen der Lastabstützung. Zur translatorischen Bewegung des Fördergutes werden beide Förderbänder in gleicher Richtung synchron bewegt, so daß sie wie ein einziges Förderband auf das Fördergut wirken, da lediglich ein kleiner Spalt zwischen beiden Förderbändern besteht.

Um dann eine Rotationsbewegung des Fördergutes um eine Vertikalachse zu erreichen, werden die beiden Förderbänder in gegensätzlicher Richtung bzw. mit unterschiedlichem Geschwindigkeitsbetrag bewegt. Dadurch wird eine Hälfte des Fördergutes in eine Richtung und die andere Hälfte in die andere Richtung "gezogen". Durch diese von den beiden Förderbändern auf das Fördergut einwirkenden, entgegengesetzt gerichteten Kräfte ergibt sich die gewünschte Drehbewegung des Fördergutes "auf einer Stelle". Der gewünschte, beliebige Drehwinkel (insbesondere 90°) wird von der Dauer und Geschwindigkeit der gegenläufigen Bewegung der beiden Förderbänder bestimmt. Nach erfolgter Drehung werden wieder beide Förderbänder in gleicher Richtung synchron bewegt. Das gedrehte Fördergut kann somit wieder an eines der beiden Enden des Doppelförderbandes transportiert werden und der weiteren Verwendung zugeführt werden, insbesondere in einer Verpackungsanlage einer Kreuzumreifungsvorrichtung, wobei das Doppelförderband mit einem Ende direkt an der Kreuzumreifungsvorrichtung angebaut ist.

Beim Übergang von einer Translationsförderung in eine Drehbewegung des Fördergutes werden im allgemeinen beide Förderbänder gestoppt und dann erneut in gegenläufiger Richtung angefahren und umgekehrt. Es ist jedoch auch möglich, nur eines der beiden Förderelemente abzubremsen oder anzuhalten, so daß im Vektorbetrag ein Geschwindigkeitsunterschied entsteht. Neben Bandförderern können auch andere Förderelemente, beispielsweise Rollenförderer, zum Einsatz kommen.

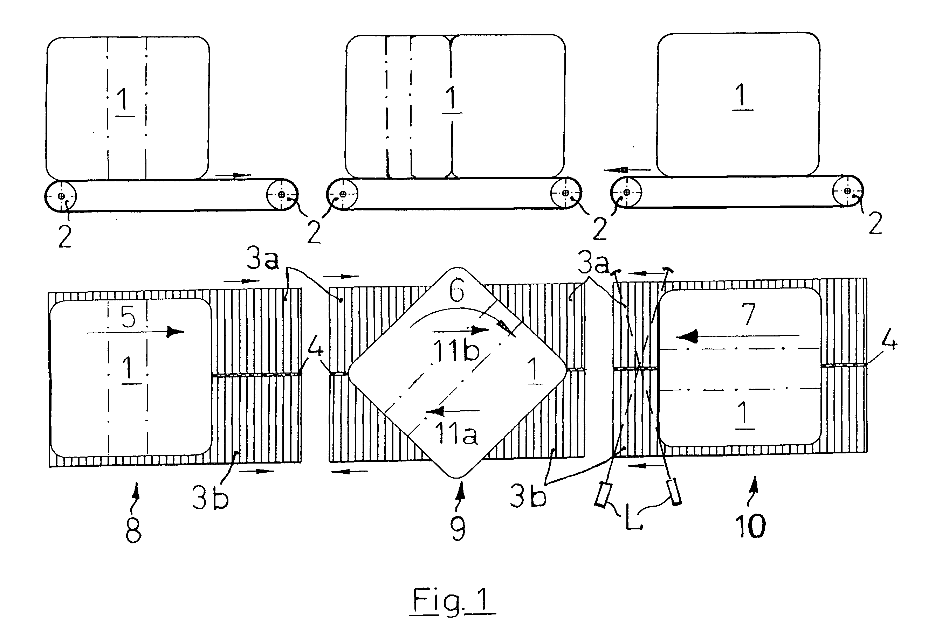

Nachfolgend wird ein Ausführungsbeispiel anhand einer Zeichnung näher erläutert und beschrieben. Hierbei zeigt die (einzige) Fig. 1 eine Draufsicht und eine darüber dargestellte, zugehörige Seitenansicht des Doppelförderers.

In Fig. 1 wird die Drauf- und Seitenansicht einer Förder- und Drehvorrichtung in drei verschiedenen Arbeitstakten 8, 9 und 10 dargestellt, nämlich mit einer ersten Transportrichtung 5, einer Drehrichtung 6 und einer zur ersten Transportrichtung 5 entgegengesetzten Transportrichtung 7 eines ballenförmigen Fördergutes 1. Als Förderelemente 3a, 3b dienen zwei als Förderbänder ausgebildete Endloselemente mit jeweils zwei Umlenkwalzen 2. Die Umlenkwalzen 2 der beiden Förderelemente 3a, 3b sind entlang einer Achse ausgerichtet und werden getrennt jeweils von einem Getriebemotor angetrieben. Zwischen beiden Förderelementen 3a, 3b ist ein geringer Spalt bzw. Abstand 4 vorgesehen.

In einem ersten Arbeitstakt 8 wird das Fördergut 1 in Transportrichtung 5 ausschließlich translatorisch bewegt. Beide Förderelemente 3a und 3b laufen in gleicher Richtung und Geschwindigkeit. Die beiden Förderelemente 3a, 3b ergänzen sich somit in der Wirkungsweise zu einem "einzigen" Förderband. Im zweiten Arbeitstakt 9 führt das Fördergut 1 eine Rotationsbewegung mit der Drehrichtung 6 um eine mittige, vertikale Drehachse aus. Das Förderband 3a führt eine entgegengesetzte (oder vom Geschwindigkeitsbetrag her unterschiedliche) Bewegung zum Förderband 3b aus.

Auf das ballenförmige Fördergut 1 wirken somit entgegengesetzt gerichtete Kraft- bzw. Förderrichtungen 11a und 11b, so daß sich eine Drehbewegung mit der Drehrichtung 6 nach dem Prinzip eines Kettenfahrzeuges ergibt. Dieses Raupenprinzip hält das ballenförmige Fördergut 1 stets zentrisch über dem Spalt 4. Der Drehwinkel ist dabei nahezu beliebig, da dieser nur von der Dauer und Geschwindigkeit der (bevorzugt entgegengesetzten) Förderrichtungen der beiden Förderelemente 3a und 3b abhängt. Bei Kreuzumreifungsanlagen erfolgt eine Drehung um 90°, wie aus der strichpunktierten Darstellung des ersten Umreifungsbandes (im Vergleich der Drauf- und Seitenansichten) erkennbar ist.

Nach erfolgter Drehung um 90° des Förderguts 1 wird in einem dritten Arbeitstakt 10 das Fördergut 1 in der Transportrichtung 7 bewegt. Das Fördergut 1 kann somit nach seiner Aufnahme (in der Fig. 1 links) von den beiden Förderelementen 3a, 3b um 90° gedreht werden und wieder an die Aufnahmeseite, die insbesondere an eine Kreuz-Umreifungsvorrichtung anschließt, zurück transportiert werden. Die exakte Einhaltung des Drehwinkels kann dabei durch wenigstens eine Lichtschranke L festgestellt werden, die eine vorauslaufende Kante des Ballens 1 erfaßt. Bei Schrägstellungen kann somit eines der Förderbänder 3a bzw. 3b kurzzeitig abgebremst oder beschleunigt werden, um die Ausrichtung zur Querebene und damit die Einlaufrichtung in den Kreuzumreifer zu korrigieren.

Insgesamt betrachtet wird mit der vorliegenden Erfindung eine sehr einfache Möglichkeit geschaffen, Fördergüter zu drehen und zu transportieren. Ein technisch aufwendiger Drehtisch ist nicht notwendig. Ebenso ist der Platzbedarf gegenüber einem Drehtisch deutlich geringer. Insbesondere bei der Integration der erfindungsgemäßen Vorrichtung in eine Verpackungsanlage mit einer Kreuzumreifungsvorrichtung ist der erforderliche Abstand zwischen den Förderbändern und dem Boden gegenüber einem Drehtisch erheblich reduziert. Das Doppelförderband kann an einer Seitenfläche direkt an die Kreuzumreifungsvorrichtung angebaut werden, wodurch sich eine weitere Schonung der Verpackungs- bzw. Ballenfolie ergibt, da der Ballen nicht auf eine feste Plattform eines Drehtisches aufgeschoben werden muß.

## Patentansprüche

1. Förder- und Drehvorrichtung zum Transportieren und Drehen eines ballenförmigen Förderguts, **dadurch gekennzeichnet, daß** zwei Förderelemente (3a; 3b) nebeneinander als Doppelförderer angeordnet sind und wahlweise in gleicher Förderrichtung (5; 7) oder mit voneinander abweichender Fördergeschwindigkeit bzw. entgegengesetzter Förderrichtung (11a, 11b) antreibbar sind.

2. Förder- und Drehvorrichtung nach Anspruch 1, **dadurch gekennzeichnet, daß** die Förderelemente (3a; 3b) als Förderbänder mit je zwei Umlenkwalzen (2) ausgebildet sind.

3. Förder- und Drehvorrichtung nach Anspruch 1, **dadurch gekennzeichnet, daß** die Förderelemente (3a; 3b) als Rollenförderer ausgebildet sind.

4. Förder- und Drehvorrichtung nach einem der vorhergehenden Ansprüche, **dadurch gekennzeichnet, daß** die beiden Förderelemente (3a; 3b) gleich lang und breit sind.

5. Förder- und Drehvorrichtung nach einem der vorhergehenden Ansprüche, **dadurch gekennzeichnet, daß** zwischen den Förderelementen (3a; 3b) ein Abstand (4) gebildet ist.

6. Förder- und Drehvorrichtung nach einem der vorhergehenden Ansprüche, **dadurch gekennzeichnet, daß** die beiden Förderelemente (3a; 3b) von jeweils einem Getriebemotor antreibbar sind.

7. Förder- und Drehvorrichtung nach einem der Ansprüche 1 bis 6, **dadurch gekennzeichnet, daß** in einem Endbereich der Förderelemente (3a; 3b) wenigstens eine Lichtschranke (L) zur Erfassung der Dreh-Endposition des Fördergutes (1) angeordnet ist, insbesondere zu einer Kreuz-Umreifungsvorrichtung hin.
